# EUROPÄISCHE PATENTANMELDUNG

(11) **EP 4 074 896 A1**
(43) Veröffentlichungstag der Anmeldung: **19.10.2022**
(21) Anmeldenummer: 21168107.7
(22) Anmeldetag: 13.04.2021
(51) Int. Cl.: E01H 1/00

(54) **CYBER-PHYSISCHES SYSTEM ZUR REINIGUNG VON VERKEHRSWEGEN UND/ODER AUSSENANLAGEN SOWIE VERFAHREN DAZU**

(71) Anmelder: Siemens Aktiengesellschaft, 80333 München (DE)
(72) Erfinder: Kramer, Martin, 80805 München (DE)

(57) **Zusammenfassung**

Die Erfindung betrifft ein Cyber-physisches System -CPS- zur automatisierten Detektion und Entfernung störender Objekte in Parks, Außenanlagen, Straßengräben etc. Außerdem betrifft die Erfindung ein Verfahren zur automatisierten Reinigung von Parks, Straßenrändern, Außenanlagen und Grünanlagen, insbesondere in Innenstädten. Dabei stehen Module erster, zweiter und dritter Art in kommunikativer Verbindung über das IoT, dergestalt, dass Module erster Art den Ist-Zustand aufnehmen, die daraus erzeugten Daten den Modulen zweiter Art über das IoT bereitstellen und die Module zweiter Art dann einen Soll-Zustand berechnen und Module dritter Art, ggf. über das IoT, aktivieren, die das störende Objekt aufsammeln und entfernen.

## Beschreibung

Die Erfindung betrifft ein Cyber-physisches System -CPS- zur automatisierten Detektion und Entfernung störender Objekte in Parks, Außenanlagen, Straßengräben etc. Außerdem betrifft die Erfindung ein Verfahren zur automatisierten Reinigung von Parks, Straßenrändern, Außenanlagen und Grünanlagen, insbesondere in Innenstädten.

Straßenreinigung findet automatisiert bislang nur auf geteerten Straßen statt, wo Reinigungsfahrzeuge, die vorzugsweise manuell gesteuert werden, sich gut bewegen können.

Cyber-physische Systeme bezeichnen einen Verbund aus sensorischen und/oder mechanischen Modulen mit einer Dateninfrastruktur, die über drahtgebundene oder drahtlose Kommunikationsnetze untereinander, in Form von Maschinenkommunikation und/oder mit dem Netz - Internet of Things "IoT"- kommunizieren. Beispielsweise werden IT-Verkehrssteuerungs- und Verkehrslogistiksysteme über Cyber-physische Systeme realisiert. Solche Systeme umfassen in der Regel mehrere Teil-Systeme und sind entsprechend komplex.

Mit zunehmender Urbanisierung und "to go" Ernährung erfolgt auch eine zunehmende Verschmutzung der Grünanlagen und der öffentlichen Parks durch Essensreste, Verpackungsmüll und sonstigen Unrat. Hinzu kommen Hunde oder andere Haustiere, die gegebenenfalls ihre Spuren hinterlassen.

Es besteht daher der Bedarf an einer automatisierten Erfassung und Reinigung der Straßenränder, Grünanlagen und öffentlichen Parks.

Der Erfindung liegt daher die Aufgabe zugrunde, ein cyber-physisches System zur Verfügung zu stellen, das automatisiert oder teil-automatisiert Unrat in an Straßenrändern und/oder Grünanlagen entfernt.

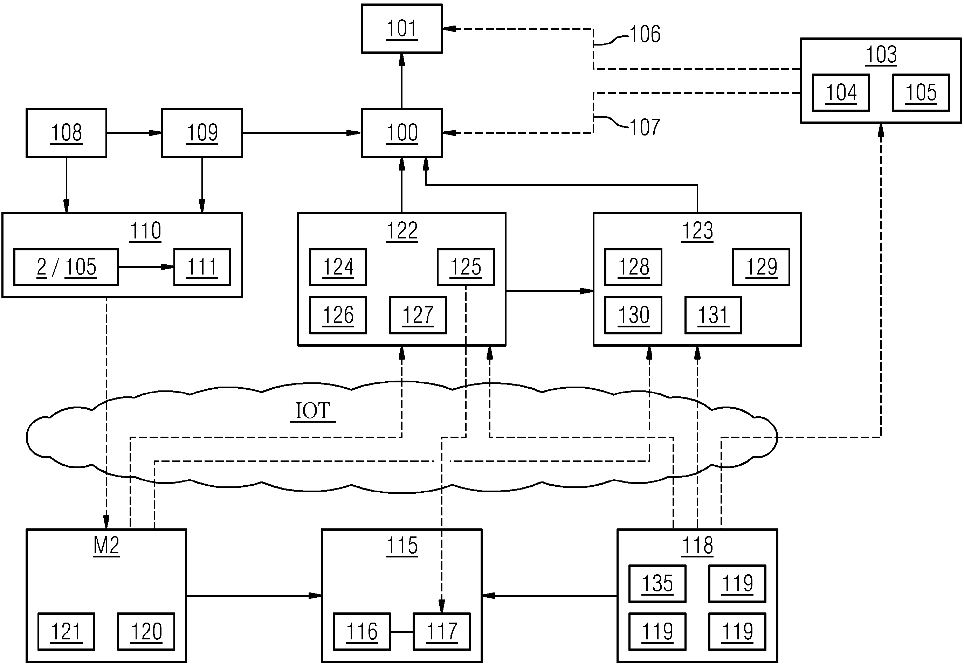

Diese Aufgabe wird durch den Gegenstand der vorliegenden Erfindung, wie er in der Beschreibung, der Figur und den Ansprüchen definiert wird, gelöst.

Dementsprechend ist Gegenstand der vorliegenden Erfindung ein Cyber-physisches System zur automatisierten Reinigung der Randbereiche von Verkehrswegen und/oder Grünanlagen, Module erster, zweiter und dritter Art, zumindest ein Kommunikationsnetz sowie dazugehörige Schnittstellen umfassend, wobei zumindest ein Modul erster Art Daten erzeugt, die einen Ist-Zustand mit einem störenden Objekt wiedergeben, diese Daten zumindest einem Modul zweiter Art über zumindest eine dafür geeignete Schnittstelle bereitstellt, wobei alle Module zumindest einen Prozessor umfassen und das zumindest eine Modul zweiter Art zumindest einen Prozessor in einem Managementsystem umfasst, der die Daten verarbeitet und das Managementsystem veranlasst zumindest ein Modul dritter Art über eine geeignete Schnittstelle zu aktivieren, wobei das zumindest eine Modul dritter Art zumindest einen Manipulator, der geeignet ist das störende Objekt aufzunehmen und/oder abzutransportieren, umfasst.

Außerdem ist Gegenstand der Erfindung ein Verfahren zur automatisierten Säuberung von Grünanlagen, mittels eines Cyber-physischen Systems, wie oben beschrieben, bei dem
- ein Ist-Zustand einer Stelle der Grünanlage mit einem störenden Objekt erfasst wird,
- eine Meldung darüber mittels Übertragung und Bereitstellung entsprechender Daten an ein Managementsystem in einem Modul zweiter Art erfolgt,
- durch das Managementsystem direkt oder mittels zumindest eines dafür konfigurierten und eingerichteten Prozessors ein Modul dritter Art mit einem Manipulator aktiviert wird und
- zumindest ein Modul dritter Art das störende Objekt anfährt, anschwimmt und/oder anfliegt, aufnimmt und/oder entfernt.

Allgemeine Erkenntnis der Erfindung ist es, dass über eine kommunizierende Kombination an sich bekannter Module, die insbesondere
- Module erster Art, die Geräte zur Erfassung, Abbildung, Ortung und Weiterleitung der entsprechenden Daten sind,
- Module zweiter Art, die Geräte zur Verarbeitung, zur Steuerung, zum Regeln, zum Machine Learning und/oder zum Vergleich von Daten sind, sowie
- Module dritter Art, die Geräte mit Manipulatoren zum Aufgreifen, Aufsaugen und/oder Transportieren von Objekten sind,
   verbindet, beispielsweise derart, dass
- ein Navigationssystem mit-verbunden ist und insbesondere mit Hilfe von
- künstlicher Intelligenz
ein sich ständig verbesserndes und überholendes Cyber-physisches System implementierbar ist, das entweder über sich in Parks oder Außenanlagen bewegende Nutzer von Smartphones und/oder über stationäre oder mobile Überwachungssysteme, die Außenanlagen und/oder Parks scannen, dort störende Objekte detektieren und automatisiert entfernen kann. Dazu umfasst das Cyber-physische System Module dritter Art mit Manipulatoren, die nach eingegangener Meldung durch ein oder mehrere Module erster Art über zumindest ein störendes Objekt durch ein Managementsystem als Teil eines Moduls zweiter Art, wobei die Module dritter Art gegebenenfalls unter Rückkopplung mit IoT und/oder KI ausgewählt sind, diese in Gang gesetzt und zum Fundort des störenden Objekts geleitet werden. Diese Module dritter Art können mehrere einzelne Geräte umfassen, die - gegebenenfalls in Zusammenarbeit - das zumindest eine störende Objekt automatisiert ferngesteuert anfahren, anschwimmen und/oder anfliegen, aufnehmen und/oder abtransportieren. Die Meldung über das störende Objekt erfolgt dabei entweder manuell über einen Nutzer mittels einer Smartphone-App oder automatisiert über entsprechend trainierte Detektionssysteme, die geeignet und/oder trainiert sind, störende Objekte von nicht-störenden Objekten in der entsprechenden Außenanlage oder in Außenanlagen generell, wie Rasenflächen, zu unterscheiden.

Als "Maschinenkommunikation" wird ein automatisierter Informationsaustausch zwischen Geräten, wie Maschinen, Drohnen, Automaten, Fahrzeugen, Containern untereinander und/oder mit einem - bevorzugt zentralen - Managementsystem, beispielsweise via Bluetooth, Wifi, optisch, mittels Ultraschalles, Schallwellen und/oder Radiowellen, bezeichnet, beispielsweise mittels drahtloser Kommunikation mit geringem Stromverbrauch wie LoRa, LoRaWAN, IrDA, ZigBee, XBee und/oder Infraschall.

Maschinenkommunikation kann von Maschine zu Maschine, aber auch über Internet of Things, IoT, über Mobilfunknetze, oder sonstige Netze erfolgen. Die Technologie der Maschinenkommunikation verknüpft dabei Informations- und Kommunikationstechnik.

"ZigBee" und/oder "XBee" sind Kommunikationswerkzeuge speziell für drahtlose Netzwerke und geringes Datenaufkommen, sie kommunizieren beispielsweise auch in einem Mesh-Netzwerk und/oder einem so genannten Ad-hoc-Netzwerk.

"LoRaWAN" hat eine Netzwerkarchitektur, die typischerweise in einer Sterntopologie angeordnet ist, bei der die Gateways die Verbindung zwischen den Endgeräten und dem zentralen Netzwerkserver herstellen. Die Gateways werden über eine Standard-IP-Verbindung mit dem entsprechenden Netzwerkserver verbunden, während die Endgeräte eine Single-Hop-Verbindung zu einem oder mehreren Gateways verwenden. Die Kommunikation ist in der Regel bidirektional. Sie unterstützt auch den Betrieb von Multicast-Adress-Gruppen, um einen effizienten Gebrauch des Spektrums für z.B. Over-the-Air Updates "OTA"-Updates zu gewährleisten.

LoRaWAN ist eine Low Power Wide Area Network (LPWAN oder Niedrigenergieweitverkehrnetzwerk) Spezifikation für drahtlose batteriebetriebene Systeme in einem regionalen, nationalen oder auch globalen Netzwerk. Es zielt insbesondere auch eine sichere bidirektionale Kommunikation ab, Lokalisierung und Mobilität von Dienstleistungen, eine Ende-zu-Ende Verschlüsselung und die Mobilität von Dienstleistungen ab. Die LoRaWAN-Spezifikation bietet dabei eine nahtlose Zusammenarbeit von verschiedenen Teil-Systemen und Techniken unter Smart Things ohne die Notwendigkeit von starren, lokalen komplexen Installationen. "LoRa" beschreibt dabei die physikalische Schicht, welche die "long range" Kommunikationsverbindung ermöglicht.

Als "Randbereich", "Grünanlage", "Außenanlage", "Park" wird vorliegend ein Bereich bezeichnet, der durch alle Arten liegengelassener und abgeworfener störender Objekte verschmutzt werden kann. Dabei ist es unerheblich, ob dieser Bereich ansonsten über Gärtner, Förster oder sonstige Bewirtschafter gepflegt oder gereinigt wird, sondern es wird - zumindest so lange das Cyber-physische System der Parkanlage noch nicht lange genug gearbeitet hat, dass es das autark entscheiden kann - auf den Nutzer der Grünanlage abgestellt, ob der ein dort liegengelassenes Objekt als "störend" empfindet oder nicht. "Störend" im einfachsten Fall ist beispielsweise ein Hundehaufen, liegengelassene Verpackung von Fast-Food, Essensreste, leere, volle oder teilgefüllte Glasverpackungen, sonstiger Müll, Plastik, Stoff- und/oder Papiertüten, kurz gesagt alles, was der Nutzer gerne in einem Abfallbehälter sehen würde, hier aber auf dem Sandweg, der Rasenfläche, dem Forst und/oder in Hecken und Büschen herumliegen sieht.

Mit "Sollzustand" wird vorliegend der Zustand der Grünanlage und des Randbereichs bezeichnet, in dem das störende Objekt weg, insbesondere entfernt, ist und der für den Nutzer unverschmutzte, gewollte und/oder natürliche Zustand des Randbereichs und/oder des Parks und/oder der Außenanlage und/oder der Grünanlage hergestellt ist.

Mittels der entsprechenden Kommunikationsinfrastruktur - gegebenenfalls unter Einbeziehung des IoT und einer künstlichen Intelligenz wird das Cyber-physische System so aufgebaut, das es automatisiert zur Säuberung von Grünanlagen einsetzbar ist.

Ein Modul zweiter Art umfasst einen Prozessor und beispielsweise zumindest einen weiteren Prozessor, der mit dem ersten kommuniziert und geeignet ist, automatische Lernsysteme durchzuführen. Weiterhin ist der Prozessor eines Moduls zweiter Art vorteilhafterweise mit einem Datenarchiv kommunikativ verbunden, wobei im Datenarchiv einerseits die Daten der Module erster Art, die Schätzwerte und Vermutungen über die physikalischen und/oder chemische Beschaffenheit des störenden Objekts ab-speicherbar sind und andererseits nach entsprechender Rückkopplung oder Rücksendung die Daten, die durch konkrete Vermessung und/oder Charakterisierung eines Moduls dritter Art von dem störenden Objekt erhoben wurden.

Dadurch können die Daten des Ist-Zustands, die über die Meldung, also Bereitstellung der Daten durch eines oder mehrere Module erster Art bereitgestellt werden, mit den Daten verglichen werden, die von den oder dem Modul dritter Art über die "Wahrheit" den Daten aus den tatsächlichen Vermessungs - und/oder Charakterisierungsresultaten des gleichen störenden Objekts bereitgestellt werden. Durch den Vergleich dieser Daten kann das Cyber-physische System viel über die Erfassung der störenden Objekte automatisiert Lernen. Dafür ist im Modul zweiter Art nach einer vorteilhaften Ausführungsform ein Lernsystem vorgesehen.

Alle Daten des Systems, nicht nur die aus dem Datenarchiv können zum Training des Lernsystems eingesetzt werden, so dass das Cyber-physische System sich laufend verbessert. Das oder die Lernsysteme der Module zweiter Art stellen dabei ihre neuesten ML-Modelle, beispielsweise in Form von Updates, bevorzugt automatisch, den Modulen erster und/oder dritter Art zur Verfügung.

Es werden insbesondere folgende Module erster Art, die der Meldung und der Detektion eines störenden Objekts dienen, eingesetzt:
Überwachungskameras, stationäre und/oder mobile, und/oder Nutzer mit Smartphones, die mit einer entsprechend programmierten App störende Objekte detektieren- gegebenenfalls und bevorzugt segmentieren und klassifizieren und automatisiert melden - z.B. über die Kamera-Funktion Unrat in Parkanlagen. Dabei erzeugt das Überwachungssystem und/oder das Smartphone mittels App - die beispielsweise mit einem Lernsystem so verbunden ist, dass sie Updates erhält - , Sensorik und/oder Kamera Daten, die automatisch einem Modul zweiter Art bereitgestellt werden. Die Module erster Art sind insbesondere vorteilhafterweise so ausgestattet, dass sie die Art des störenden Objekts klassifiziert melden, also z.B. Bioabfall, Glasabfall, Plastikabfall, Fundsache etc... dazu umfassen die Module erster Art beispielsweise Sensoren und/oder Prozessoren mit gespeicherten visuellen Vergleichsdaten, die abgleichen, ob die Oberfläche des detektierten störenden Objekts fest, weich, glänzend, matt, porös, flüssig, dispersiv, also feste Bestandteile in einer Flüssigkeit, Schlammig etc sind. Weitere Module erster Art mit Detektoren könnten z.B. Gerüche aufnehmen und vergleichen.

Beispielsweise wird eine so klassifizierte Meldung über das störende Objekt durch ein Modul erster Art über die entsprechende Kommunikationsschnittstelle, vorzugsweise mit Daten zur Ortung, an ein Modul zweiter Art weitergeleitet, das diese Daten nach einer vorteilhaften Ausführungsform zunächst auf Plausibilität prüft.

Die Plausibilität kann mehrere Faktoren einbeziehen, beispielsweise kann die Plausibilität zunächst dazu dienen, festzustellen, ob das gemeldete störende Objekt dort überhaupt sein kann.

Eine auf Plausibilität geprüfte Meldung wird dann an ein Regel- und Steuersystem weitergeleitet, das zumindest eine entsprechende Antriebstechnische Einheit in Form eines Moduls dritter Art, also eines Gerätes, das ferngesteuert sich bewegen kann und vorgegebene Koordinaten automatisiert anfährt und das weiterhin über Manipulator als Mittel zur Aufnahme, wie beispielsweise einen Sauger, einen Greifarm etc. verfügt, durch das das Gerät ein störendes Objekt aufnehmen und/oder transportieren kann, aktiviert.

Ein Modul erster Art kann beispielsweise eine mobile Überwachungskamera als Teil einer Drohne, die mit einer Kamera ausgestattet ist, sein. Ein Modul dritter Art kann beispielsweise eine Drohne mit einem oder mehreren Greifarmen sein. Nach einer vorteilhaften Ausführungsform sind beispielsweise beide Module, die der ersten und die der dritten Art, in der gleichen Drohne realisiert. Dabei hat die Drohne beispielsweise einerseits eine Kamera, andererseits einen Greifarm und außerdem eine Dateninfrastruktur und Schnittstellen, über die die Daten der Kamera über eine geeignete Schnittstelle dem Greifarm bereitgestellt werden.

Insbesondere vorteilhaft ist dabei, dass Dateninfrastruktur, Kommunikationsmittel und Schnittstellen, genau wie Kamera und Greifarm, in einer Drohne realisiert sein können, so dass physisch alles, was zur Bereitstellung einer derartigen Ausführungsform des Cyber-physischen-Systems nach der Erfindung erforderlich ist, in der einen Drohne realisiert ist.

Als "Drohne" wird ein unbemanntes Fahrzeug, insbesondere Luftfahrzeug, das ohne eine an Bord befindliche Besatzung autark durch einen Computer über eine Fernsteuerung betrieben und navigiert werden kann. Eine Drohne kann beispielsweise auch ein unbemanntes Lastfahrzeug und/oder ein Boot oder ein Amphibienfahrzeug sein. Eine "Drohne" kann auch einen Manipulator umfassen, wie beispielsweise einen Greifarm und/oder eine Saugvorrichtung. Eine Drohne im Sinne der vorliegenden Erfindung kann beispielsweise von der Meldung über die Steuerung und schließlich auch die Transaktion mittels Manipulators alles in einem Gerät realisiert haben.

Das Modul zweiter Art umfasst insbesondere ein Managementsystem, das ein Geo-Information-System (GIS) hat oder mit einem verbunden ist. Das Modul zweiter Art kann beispielsweise in Form eines Prozessors, der Teil einer Datenverarbeitungseinheit einer fernsteuerbaren Drohne ist, realisiert sein.

Nach einer vorteilhaften Ausführungsform der Erfindung umfasst das Modul zweiter Art ein oder mehrere Prozessor(en), die so eingerichtet sind, dass sie eine Prüfung der Meldung durch das Modul erster Art auf Plausibilität rechnergestützt durchführen.

Als "Managementsystem" wird grundsätzlich jede Art von Steuerung bezeichnet, die von einem Modul erster Art empfängt und verarbeitet sowie ein Modul dritter Art steuert und/oder regelt. Das Managementsystem als zumindest Teil des Moduls zweiter Art kann - physisch gesehen - Teil eines Moduls erster und/oder dritter Art sein. Insbesondere kann in - beispielsweise - einer Drohne, einem ferngesteuerten Fahrzeug jede Art der Module, Schnittstellen und Kommunikationssysteme nach der vorliegenden Erfindung verwirklicht sein. Dabei kann eine Kommunikation mit dem IoT, genau wie bei einem Smartphone, verwirklicht sein oder nicht.

Als "IoT" wird das Internet der Dinge bezeichnet, also ein Sammelbegriff für Technologien einer globalen Infrastruktur der Informationsgesellschaften, die es ermöglicht, physische und virtuelle Gegenstände miteinander zu vernetzen und sie durch Informations- und Kommunikationstechniken zusammenarbeiten zu lassen.

Im IoT ist beispielsweise ein Geoinformationssystem verankert, das die Erfassung, Bearbeitung, Organisation und Präsentation räumlicher Daten, insbesondere auch eine Ortung eines gemeldeten störenden Objekts ermöglicht.

Unter einem "Modul" kann im Zusammenhang mit der Erfindung beispielsweise eine Drohne, ein ferngesteuertes Fahrzeug, ein Automat, eine Kamera, ein Sensor, ein Prozessor und/oder eine Speichereinheit zum Speichern von Programmcode verstanden werden. Beispielsweise ist der Prozessor speziell dazu eingerichtet, den Programmcode derart auszuführen, damit der Prozessor Funktionen ausführt, um das erfindungsgemäße Verfahren oder einen Schritt des erfindungsgemäßen Verfahrens zu implementieren oder realisieren. Die jeweiligen Module können beispielsweise auch als separate bzw. eigenständige Module ausgebildet sein. Hierzu können die entsprechenden Module beispielsweise weitere Elemente umfassen.

Diese Elemente sind beispielsweise eine oder mehrere Schnittstellen (z. B. Speicherschnittstellen, Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt) werden. Mittels der Evaluierungseinheit können Daten beispielsweise rechnergestützt und/oder automatisiert erzeugt, verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Ein Modul erster Art ist jede Art von Sensor- und/oder Aufnahmegerät, das ein störendes Objekt erkennt und meldet, also z.B. die Wirklichkeit, den "Ist-Zustand" aufnimmt und daraus rechnergestützt verarbeitbare Daten erzeugt. Beispielsweise kann ein Modul erster Art über eine Kamerafunktion visuelle Daten erzeugen, oder über eine Sensorfunktion Gerüche aufnehmen und analysieren, die dann über ein Modul zweiter Art an ein Modul dritter Art gesendet und/oder übermittelt werden. Nach einer vorteilhaften Ausführungsform des Moduls erster Art wird zusammen mit der Wiedergabe des Ist-Zustands also z.B. der Darstellung des störenden Objekts und der dazugehörigen Orts-Koordinaten auch eine Klassifikation und/oder eine Segmentierung des störenden Objekts vorgenommen, beispielsweise der Art Biomüll, Essensreste, Verpackungsreste, Papier, Glas etc., die ebenfalls an das Modul zweiter Art, zusammen mit der Meldung, übermittelt wird.

Nach einer vorteilhaften Ausführungsform wird die Meldung durch eine so genannte "intelligente Unschärfe" begleitet, so dass das Modul erster Art zwar erst mal ein störendes Objekt erkennt, erfasst und meldet, aber gleichzeitig nicht gehindert ist, weitere sich beispielsweise in unmittelbarer Nähe befindliche, störende Objekte zu erkennen, erfassen und zu melden.

Die auch als "unscharfe Suche" bekannte intelligente Unschärfe umfasst z.B. eine Suchmethode, bei der nicht nur die exakte Zeichenfolge, sondern auch ähnliche Zeichenketten gefunden werden. Diese Technik kann auch auf das Auffinden von störenden Objekten in Außenanlagen übertragen werden.

Beispielsweise erkennt ein mit intelligenter Unschärfe konfiguriertes und eingerichtetes Cyber-physisches System neben einem Essensrest eine Verpackung, und/oder auch eine verstreute, also diffuse, Verunreinigung durch Konfetti etc. und fliegt nicht nach jedem aufgesammelten Konfetti zum Abfalleimer und lädt diesen ab, sondern sammelt in einem Bereich die Konfettis ein und entfernt eine ganze Anzahl an Konfettis auf einmal.

Dabei ist insbesondere auch eine Ausführungsform möglich, die dabei ohne dezidierte Meldung gleich vom Erkennen des störenden Objekts eine Kommunikation zum Modul dritter Art aufbauen kann, das dann ohne weitere Prüfung und/oder ohne weiteren Auftrag das Modul dritter Art aktiviert und das Entfernen durchführt. Bei einem derartigen Aufbau ist das "Modul zweiter Art" im Cyber-physischen System beispielsweise eine oder mehrere geeignete Schnittstelle(n) und/oder die Kommunikation zwischen dem Modul erster Art und dem Modul dritter Art.

Das Modul zweiter Art empfängt die Daten des Moduls erster Art über eine geeignete Schnittstelle und leitet diese entweder direkt an ein Modul dritter Art oder verarbeitet diese im Managementsystem.

Insbesondere, wenn die Module erster, zweiter und dritter Art nicht nur in einem einzigen Gerät, wie einer einzigen Drohne realisiert sind, sind diese insbesondere ein Modul oder ein Teil eines Moduls zweiter Art, das mit dem IoT und/oder mit einem Lernsystem verbunden. Das Modul zweiter Art berechnetgegebenenfalls über eine Schnittstelle und Kommunikation zum IoT - eine Plausibilität, beispielsweise kann mitten im Fluss ein Hundehaufen liegen? - bevor die weitere Verarbeitung der Daten erfolgt.

Eine Verbindung mit dem IoT ist auch wegen des Datenarchivs bevorzugt im Modul zweiter Art vorgesehen. Dies insbesondere deshalb weil, selbst bei einem Deployment von Modul erster, zweiter und dritter Art in einer Drohne ist das beispielsweise ein Mini-Deployment eines Moduls zweiter Art, im Sinne eines temporären Stellvertreters (Porxy) bei Offline Szenarien.

Beispielsweise würde die Drohne zwar offline also ohne Verbindung zum IoT im Betrieb Trainingsdaten erheben, das Training selbst ist aber Cloud-basiert, erfordert also eine Verbindung zum IoT.

Im Modul zweiter Art werden z.B. die auf Plausibilität geprüften Daten des oder der Module erster Art mit Daten einer dort vorliegenden Datenbank rechnergestützt verglichen. So kann beispielsweise Müll, Unrat, Essensreste und/oder ein Hundehaufen, der von einer Kamera erfasst wird, identifiziert und mittels des IoT oder einer anderen Dateninfrastruktur, die ein Navigationssystem umfasst, geortet werden.

Das Modul zweiter Art, das mit dem IoT verbunden ist, führt z.B. folgende Prozesse aus:
- Ortung des über ein Modul erster Art erfassten Unrats,
- Prüfung der Plausibilität des identifizierten Unrats mit der Ortung,
- Auswahl - gegebenenfalls mittels einer KI und/oder sonstigen maschinellen Lernens - aus den bekannten Daten zu Unrat, Müll, Fäkalien, etc. eine Art des oder der Moduls dritter Art, also eine Art des Abtransports z.B. Drohne, Saug-, Kehr- und/oder Wisch-roboter sowie gegebenenfalls Kombinationen davon,
- Aktivierung des Moduls dritter Art zur Entfernung und/oder zum Abtransport, insbesondere über ein integriertes oder verbundenes Steuer- und Regelsystem,
- Steuerung und/oder Leitung des Moduls dritter Art an die Stelle, wo das störende Objekt geortet wurde,
- Regelung und Steuerung des Abtransports des Mülls durch ein oder mehrere Modul(e) dritter Art und
- gegebenenfalls Empfang und Verarbeitung einer Rückmeldung des Moduls dritter Art über die physikalische und/oder chemische Charakterisierung des störenden Objekts und/oder den Erfolg des Abtransports als Trainingsdaten für ein Lernsystem, das an das Modul zweiter Art angeschlossen und/oder mit diesem verbunden ist.

Durch das Modul zweiter Art wird ein Befehl und/oder eine Steuerung ausgelöst, die zumindest ein Modul dritter Art, beispielsweise einen Roboter und/oder eine Drohne, aktiviert, zu der Stelle steuert und dort über entsprechende Antriebe und Werkzeuge am Modul dritter Art das störende Objekt, z.B. den Hundehaufen und/oder den Unrat entfernt, beispielsweise aufsaugt oder aufnimmt. Die Steuerung führt dann dieses Modul dritter Art mitsamt der Ladung an eine Station zur Entsorgung, beispielsweise einen Abfalleimer oder ähnliches.

Nach einer anderen gegebenenfalls auch kombinierten Ausführungsform der Erfindung ist die Station zur Entsorgung mobil, beispielsweise ein fahrender gegebenenfalls auch ferngesteuerter, insbesondere auch automatisiert ferngesteuerter Laster, der den Unrat aufnimmt und zum Mülleimer fährt oder zu einer Müll-Weiterverarbeitung, wie Recycling-station oder ähnliches, je nach Art und Beschaffenheit des störenden Objekts.

Ein Modul dritter Art umfasst immer einen Manipulator mit Antrieb und beispielsweise Greifarm, einen Sauger oder einen Wischmopp. Beispielsweise ist ein Modul dritter Art eine Drohne oder ein Saug-Roboter, der gezielt den "gemeldeten" Müll aufnimmt und zur Station zur Entsorgung bringt, beispielsweise zu einem Laster, Lager oder einem Müllcontainer.

Nach einer vorteilhaften Ausführungsform der Erfindung überträgt das Modul dritter Art über eine Schnittstelle das Ergebnis des Entfernens zurück an das Modul zweiter Art, so dass das Modul zweiter Art eine Rückkopplung hat, ob die gefundene Lösung, also das Entfernen des Mülls mit dem aktivierten Aktor erfolgreich, weniger erfolgreich oder gar nicht erfolgreich war. Ebenso ist gegebenenfalls vorgesehen, dass das Modul dritter Art, dass "die Wahrheit" kennt, das störende Objekt vermisst, wiegt, physikalisch und/oder chemisch analysiert und so Daten dem Modul zweiter Art bereitstellen kann, mit denen es die Daten, die von der Erfassung des störenden Objekts durch visuelle oder sonstige Aufnahme durch ein Modul erster Art stammen, vergleichen kann. Diese Daten können im Datenarchiv abgespeichert und dort einem Lernsystem zur Verfügung gestellt werden.

Nach einer vorteilhaften Ausführungsform umfasst das Modul zweiter Art einen derartigen Prozessor, der ein Lernsystem umfasst, um aus den Ergebnissen der jeweiligen Aktionen der Module dritter Art beispielsweise automatisiert zu lernen, welcher Manipulator für welchen Unrat an welchem Ort passend ist. Diese ML-Modelle, die aus dem automatischen Lernen entstehen, werden dann im Cyber-physischen System wiederum allen anderen Modulen zur Verfügung gestellt.

Im Folgenden wird die Erfindung noch anhand einer Figur, die schematisch eine Systemarchitektur einer Ausführungsform eines Beispiels eines möglichen Cyber-physischen Systems nach der Erfindung zeigt, genauer erläutert:
Mittig zu erkennen ist das störende Objekt, Müll oder Fundstück 100 umfassend, das im Park 101 über ein Modul erster Art 103, 110, wie ein stationäres und/oder mobiles Überwachungssystem 103 z.B. ein Closed Circuit Television CCTV-System 103 und/oder eine Drohne mit einer Kamera 104 und gegebenenfalls einem rechnergestützten machine learning Model ML Model-System 105 gefunden und gemeldet wird. Das stationäre Überwachungssystem überwacht - dargestellt über Pfeil 106 - den Park 101 und findet - siehe Pfeil 107 - das störende Objekt 100. Durch das im CCTV-System integrierte automatische Meldesystem meldet, segmentiert und klassifiziert das hier gezeigte CCTV-System danke seines ML-Modells 105, gegebenenfalls mit Hilfe von entsprechenden Sensoren (nicht gezeigt) das störende Objekt nach Art der Beschaffenheit, respektive der Art der Fundsache, zumindest aber nach Ausmaßen, Oberflächenbeschaffenheit, Größe, Gewicht, etc. Je nach Reifegrad der machine learning ML-Model 105, das hier integriert ist, wird die Klassifikation, Segmentierung besser oder schlechter laufen.

Beispielsweise wird das hier dargestellte System durch die Rückkopplung 105, 127, 130 mit künstlicher Intelligenz 118, die die erfolgte Klassifikation und/oder Segmentierung ständig durch mittels Kamera 104 im CCTV 103 erfasste und klassifizierte Daten 115, 116, 117 trainiert, im Gebrauch kontinuierlich verbessert. Diese Metadaten 116 zum störenden Objekt werden, ebenso wie die Daten 117 mit denen das störende Objekt erfasst wurde, beispielsweise also die visuellen Daten aus der Kamera, an ein Managementsystem M2 gesendet.

Andererseits schlendert beispielsweise ein Nutzer 108 mit seinem Smartphone 109 durch den Park und fotografiert - siehe Pfeil 1 -, eine entsprechende App 109nutzend, mit dem Smartphone 109 das störende Objekt 100. Die App erzeugt aus dem Foto 111 Metadaten 2 wie Klassifikation, Größe, vermutetes Gewicht und den Auftrag 110 und ist geeignet, das störende Objekt 100, zu segmentieren, zu orten und zu beschreiben. Dazu hat die App 110 gegebenenfalls entsprechende Sensoren und/oder Vergleichsdaten. Andererseits kann der Nutzer auch über die App seine Einordnung und seine Metadaten 2 zu dem Foto 111 respektive dem störenden Objekt 100 eingeben, so dass diese ebenfalls - z.B. über das IoT - an ein Managementsystem M2 des angeschlossenen Moduls zweiter Art M2, 115 118 weitergeleitet werden.

Das oder die Module erster Art 103, 110 stellen die visuellen Daten der Erfassung des störenden Objekts 100, genauso wie eventuell vorhandene Metadaten 2 dazu, einem oder mehreren Modul(en) zweiter Art bereit, beispielsweise werden die Daten dem Managementsystem M2, das über ein Geoinformationssystem (GIS), sowie über Planungs- und Kontrollfähigkeiten verfügt, bereitgestellt. Dort werden die visuellen, akustischen und sonstigen Daten verarbeitet, die zum Auftrag gehören, insbesondere werden sie auf Plausibilität und Relevanz geprüft - z.B. kann ein Hundehaufen mitten im Weiher liegen oder befindet sich das störende Objekt in einem Bereich, der für eine Reinigung nicht vorgesehen ist?

Die Nutzung des Cyber-physischen Systems kann einfach dadurch festgestellt werden, dass Daten, die Aufnahmen von störenden Objekten samt Ortsangabe an eine entsprechende Kommunikationsschnittstelle geschickt werden, wobei die Schnittstelle den Empfang dieser Daten zurück zum Sender rückverfolgt und so die Autorisierung des Senders und/oder des sendenden Gerätes prüft.

Im - vorzugsweise intelligenten - Managementsystem, also Steuerungs- und/oder Regelsystem - M2 werden dann je nach Art des störenden Objekts 100 und je nach Ort, wo sich dieser befindet, die Module dritter Art, wie Drohne, Roboter, beispielsweise Saug- und/oder Kehrroboter, Lastfahrzeug, Schwimmender Lastenaufnehmer und/oder Transporter, aktiviert und beauftragt, das störende Objekt aufzunehmen und/oder abzutransportieren.

Kriterien für die Auswahl des Moduls dritter Art durch das Managementsystem sind beispielsweise
- Zuständigkeit für den Fundort
- Zuständigkeit für die Art des störenden Objekts
- Erreichbarkeit für das gewählte Gerät (Land/Wasser/Luft)
- Reichweite - nahe genug am Ort stationiert
- Genügend Ladekapazität für das störende Objekt
- Kann das Modul dritter Art das störende Objekt aufladen/aufsammeln z.B. abhängig von der Greifstrategie, mechanischen Belastbarkeit des Moduls dritter Art und/oder von der Tragekapazität,
- Möglichkeit des Moduls dritter Art über Fernsteuerung, gegebenenfalls automatisierte Fernsteuerung, an den Ort hinfahren, hinschwimmen und/oder hinfliegen zu können.

Beispielsweise kann das Modul dritter Art eine fliegende, fahrende und/oder schwimmende Drohne sein, die gegebenenfalls mit einer oder mehreren weiteren Drohnen gekoppelt ist, mit der sie sich automatisch koordiniert und gegebenenfalls die Ladung, also das störende Objekt 100 ablädt und/oder die Last teilt.

Das Modul zweiter Art, also z. B. das Managementsystem M2, wird automatisiert durch die Bereitstellung und den Empfang der Daten von dem oder den Modul(en) erster Art aktiviert. Die Daten werden innerhalb des Moduls zweiter Art in einem Datenarchiv 115 einerseits, beispielsweise im Zusammenhang mit dem "Auftrag 1 ...n" 116 und/oder dem "Ist-Bild" 117, gespeichert und andererseits werden sie eingesetzt, um die Künstliche Intelligenz "KI" 118 z.B. das machine learning System zum Trainieren der "ML" - Modellen 119 eines gegebenenfalls integrierten und/oder angeschlossenen Lernsystems 118 und/oder Modelarchivs 118 zu befähigen.

Ein Modul zweiter Art, wie im in der Figur dargestellten Ausführungsbeispiel das Managementsystem M2 mit beispielsweise smartem Steuerungssystem, umfasst zumindest einen Prozessor, der so konfiguriert ist, dass er aus den empfangenen Daten zusammen mit den Daten, auf die er zugreifen kann, wie beispielsweise die Daten aus dem Datenarchiv 115 und/oder die Ergebnisse aus der KI 118, nach der Prüfung auf Plausibilität eine Relevanz des Auftrags errechnet. Die Relevanz liegt beispielsweise in Form einer Priorisierung in welcher Reihenfolge die Aufträge abzuarbeiten sind, vor.

Das Lernsystem 118 füttert ein Modellarchiv 135 und/oder "KI" und/oder künstliche Intelligenz mit laufend verbesserten ML-Modellen 119. Das Training wird durch Abruf der Daten aus dem Datenarchiv 115 getriggert. Im Datenarchiv 115 werden die Daten der Module erster Art 117, die den "Ist-Zustand" darstellen einerseits und die Daten 116, die durch die Charakterisierung durch die Module dritter Art gesammelt werden, andererseits zur Verfügung gestellt.

Als "KI" wird die Automatisierung intelligenten Verhaltens und das maschinelle Lernen "machine learning" bezeichnet. Künstliche Intelligenz unternimmt den Versuch mittels statistischer Verfahren und/oder neuronaler Netze, die den Gehirnstrukturen irgendwie nachempfunden sind, bestimmte Entscheidungsstrukturen des Menschen nachzubilden. Dazu wird z.B. nach einem "iterativen-Verfahren" immer wieder eine Entscheidung durch das System automatisiert getroffen, umgesetzt und das Ergebnis evaluiert, wenn die Entscheidung und im Nachgang das Ergebnis zielführend war, wird auf dem Pfad weiterentschieden, wenn nicht, wird dieser Pfad als "Holzweg" klassifiziert und bei zukünftigen Entscheidungen vermieden.

Typische Trainingsarten einer KI sind:
a) Überwachtes Lernen durch Vergleichen der Rückmeldung des lernenden Moduls mit den tatsächlich vorliegenden Daten und
b) Über Datensammeln in einem Datenarchiv bei dem der Trainingseffekt darin liegt, dass mit der Zeit immer mehr Daten vorhanden sind, mit denen das Modul seine Daten, die es empfängt, vergleichen kann.

Unter einem "Prozessor" kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, einen TPU (Tensor Processing Unit) und/oder NPU (Neural Processing Unit), die technisch einem Hybriden aus ASIC und FPGA und/oder DSP ähnlich sind, handeln. Zudem gibt es COTS Boards z.B. Google Coral oder Intel Movidius... die bezeichnen sich auch als VPUs... KI Koprozessoren. Beispielsweise kann es sich auch um eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungs-spezifische integrierte Schaltung, engl. Application-Specific Integrated Circuit), oder einen DSP (Digitaler Signal-prozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens oder der Module, oder anderer Aspekte und/oder Teilaspekte der Erfindung realisiert.

Unter "rechnergestützt" oder "computergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt. Beispielsweise ist unter "rechnergestützt" oder "computergestützt" auch "computerimplementiert" zu verstehen.

Unter "Bereitstellen", insbesondere in Bezug auf Daten, Metadaten und/oder sonstige Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden. Unter "Bereitstellen" kann im Zusammenhang mit der Erfindung beispielsweise auch ein Laden oder ein Speichern, beispielsweise einer Transaktion mit entsprechenden Daten verstanden werden. Unter "Bereitstellen" kann beispielsweise auch ein Übertragen (oder ein Senden oder ein Übermitteln) von entsprechenden Daten von einem Knoten zu einem anderen Knoten verstanden werden.

In dem Managementsystem M2 wird gegebenenfalls über die KI eine Bergungsstrategie für das störende Objekt 100 errechnet und zumindest ein Modul dritter Art 122 und/oder 123 - ein Werkzeug des Abtransports z.B. Drohne, Lastfahrzeug, Saug-, Kehr- und/oder Wisch-roboter sowie gegebenenfalls Kombinationen davon bedarfsorientiert - also beispielsweise je nach Klassifikation des störenden Objekts 100 - beauftragt.

Die Module dritter Art 122, 123 sind mit dem Managementsystem M2 und untereinander vernetzt und können miteinander automatisiert direkt und/oder über das IoT und/oder über das Managementsystem M2 kommunizieren. Das Modul dritter Art 122 ist bei der hier gezeigten Ausführungsform eine fernsteuerbare Drohne 122, die über eine Positionsbestimmung 124, beispielsweise GPS, eine Kamera 125, beispielsweise eine 360° Kamera 125, eine KI mit einem machine learning "ML" -Modell 127 und schließlich über einen Manipulator, wie einen Greifarm 126, verfügt.

Das Modul dritter Art 123 ist beim in der Figur gezeigten Beispiel ein fernsteuerbares Lastenfahrzeug 123, das ebenfalls über eine Positionsbestimmung 128, eine Kamera 129, eine KI mit einem machine learning "ML" - Modell 131 und einen Manipulator, wie einen Greifarm 130 verfügt. Das Modul 122, 123 ist ebenso wie die Manipulatoren 130 und 126 automatisiert steuerbar.

Die beauftragten Module dritter Art 122 und 123 koordinieren sich gegenseitig, finden sich gemeinsam am Einsatzort ein und bergen und transportieren das störende Objekt 100. Bei diesem Vorgang wird das störende Objekt 100 lokalisiert, fotografiert, und geborgen. Beispielsweise verfügen die Module 122 und/oder 123 auch über Mittel zur Charakterisierung, beispielsweise zum Wiegen und/oder Vermessen des störenden Objekts 100. Diese Daten werden zum Training des Lernsystems 118 und/oder dem Datenarchiv 115 eines Moduls zweiter Art bereitgestellt. Die bereitgestellten Daten 116 aus der realen Vermessung durch die Module dritter Art können dann die Lernsysteme 118 und/oder das Modellarchiv 135 eines Moduls zweiter Art bereitgestellt werden. Die dabei gesammelten Informationen und Daten 117,116er physikalischen und/oder chemischen Charakterisierung des störenden Objekts 100 werden auch dem Modul zweiter Art, beispielsweise im Datenarchiv 115, als Daten 116, auf die das Lernsystem 118 zugreift, bereitgestellt. Dies beispielsweise auch im Hinblick auf einen Vergleich mit den Daten 117 des Ist-Zustand aus den vermuteten und/oder abgeschätzten Daten der Module erster Art 103, 110.

Wenn sich ein Lastenfahrzeug 123 am Einsatzort befindet, das über eine größere Ladekapazität verfügt, als das störende Objekt 100 braucht, werden weitere störende Objekte (nicht dargestellt) oder auch Sonstiges auf dieses geladen, ohne dass das Lastenfahrzeug 123 vorher zur Station zurückfährt. Die Kommunikation unter den Modulen ist darauf ausgerichtet, immer die einfachste Lösung zu finden. Die Module dritter Art 122, die beispielsweise auch vom Gewicht/Umfang noch auf das Lastenfahrzeug 123 passen, können auch von diesem zu einer Basisstation zurückgebracht werden.

Das Verfahren zur Reinigung mit einem Cyber-physischen System nach einer beispielhaften Ausführungsform der Erfindung zeichnet sich dadurch aus, dass die Module dritter Art 122, 123 Daten zur Charakterisierung des störenden Objekts 100 bereitstellen, die sie dem Datenarchiv 115, 116 und/oder dem Lernsystem 118 eines Moduls zweiter Art zum Training bereitstellen.

Durch das Erfassen der approximativ geschätzten Auftragsdaten bezüglich der physischen Dimension des störenden Objekts, der Plausibilitätsprüfung 121 im smarten Managementsystem M2, und der Speicherung im Datenarchiv 115, 117 sowie dem Abgleich mit der Realität durch die erfassten Daten 116 vom Wiegen und Vermessen beim Einsammeln durch die Module dritter Art 122 und/oder 123 erfasst das Cyber-physische System Trainingsdaten um seine eigenen machine learning ML-Modelle 119, 105, 127 und 131 durch Training zu sensibilisieren und deren Genauigkeit im Betrieb zu erhöhen.

Die im Modul zweiter Art 118 aktualisierten ML-Modelle 119 werden "ins Feld" kommuniziert und beispielsweise durch "O-ver-the-Air" -OTA-Update in die Module dritter Art 122 und/oder 123 gebracht, wo sie in Form der ML-Modelle 127 und/oder 131 vorliegen.

Die ML-Modelle 119 sind keine digitalen Kopien untereinander, sondern sie sind immer Ergebnis des jeweiligen Machine-Learning Prozesses, der im Lernsystem 118 stattfindet und/oder im Modellarchiv 118 gespeichert vorliegt, wobei das Lernsystem sich z.B. der Daten aus dem Datenarchiv 115 bedient und das Ergebnis in Form des jeweiligen ML-Modells 119 zugeschnitten den Modellen erster, respektive dritter Art bereitgestellt wird. Vorteilhafterweise werden diese ML-Modelle 119 auch wieder im Modellarchiv 135gespeichert. So ist auch Transfer-Learning möglich.

Dadurch lernt das Cyber-physische System - insbesondere eines das in einem Park, in dem das System schon trainiert wurde - über die Zeit automatisch alle anfallenden Arten von störenden Objekte 100 kennen und kann im Überwachungsmodus über die Module 103, 122 und 123 automatisiert Verunreinigungen erkennen, melden und beheben.

Aber auch Nutzer, die mit dem Smartphone respektive der App dem Cyber-physischen System melden, können die erweiterten Fähigkeiten, z.B. auch in Form von ML-Modellenüber OTA Updates in die Apps verbracht werden.

Dabei ist es durchaus möglich, dass eine einzige Drohne 122, ebenso wie eine darin oder daran befindliche Kamera 125, sowohl als Modul erster Art zum Detektieren und Melden eines störenden Objekts wie auch als Modul dritter Art zum Einsammeln und Transportieren durch das Cyber-physische System genutzt wird.

Durch die autonome Verbesserung des Cyber-physischen System im Einsatz ist durch die vorliegende Erfindung erstmals eine Möglichkeit zur automatisierten Reinigung der Grünflächen, Außenanlagen und/oder Parks zur Verfügung gestellt.

Die Erfindung betrifft ein Cyber-physisches System -CPS- zur automatisierten Detektion und Entfernung störender Objekte in Parks, Außenanlagen, Straßengräben etc. Außerdem betrifft die Erfindung ein Verfahren zur automatisierten Reinigung von Parks, Straßenrändern, Außenanlagen und Grünanlagen, insbesondere in Innenstädten. Dabei stehen Module erster, zweiter und dritter Art in kommunikativer Verbindung über das IoT, dergestalt, dass Module erster Art den Ist-Zustand aufnehmen, die daraus erzeugten Daten den Modulen zweiter Art über das IoT bereitstellen und die Module zweiter Art dann einen Soll-Zustand berechnen und Module dritter Art, ggf. über das IoT, aktivieren, um den Soll-Zustand herzustellen. Die Module dritter Art, die über Manipulatoren, also z.B. einen Greifarm, einen Sauger, generell eine Aufnahme-vorrichtung, etc. verfügen, sammeln das störende Objekt auf, können es gegebenenfalls charakterisieren und die Daten der Charakterisierung den ML-Modellen der Module zweiter Art zum Training bereitstellen, bevor diese Module der dritten Art das störende Objekt abtransportieren. Insbesondere durch die Verfügbarkeit der tatsächlichen Charakterisierung des störenden Objekts und die Möglichkeit des Vergleichs mit den abgeschätzten Daten der Module erster Art kann das Cyber-physische System sich ständig verbessern und sich auf die im Fokus stehende Grünanlage spezialisieren.

## Patentansprüche

1. Cyber-physisches System zur automatisierten Reinigung der Randbereiche von Verkehrswegen und/oder Grünanlagen, Module erster, zweiter und dritter Art, zumindest ein Kommunikationsnetz sowie dazugehörige Schnittstellen umfassend, wobei zumindest ein Modul erster Art (103,110) Daten erzeugt, die einen Ist-Zustand mit einem störenden Objekt wiedergeben, diese Daten zumindest einem Modul zweiter Art (M2, 115, 118) über zumindest eine dafür geeignete Schnittstelle bereitstellt, wobei das zumindest eine Modul zweiter Art (M2, 115, 118) zumindest einen Prozessor in einem Managementsystem (M2) umfasst, der die Daten verarbeitet und das Managementsystem (M2) veranlasst zumindest ein Modul dritter Art (122, 123) über eine geeignete Schnittstelle zu aktivieren, wobei das zumindest eine Modul dritter Art zumindest einen Manipulator (126,130), der geeignet ist das störende Objekt aufzunehmen und/oder abzutransportieren, umfasst.

2. Cyber-physisches System nach Anspruch 1, wobei ein Modul erster Art (103, 110) ein Modul zweiter Art (M2, 115, 118) und ein Modul dritter Art (123, 122) in einem einzigen Gerät realisiert sind.

3. Cyber-physisches System nach Anspruch 2, bei dem das Gerät eine Drohne (122) ist.

4. Cyber-physisches System nach einem der vorhergehenden Ansprüche, bei dem das Modul zweiter Art (M2, 115) über ein Datenarchiv verfügt, das mit dem Lernsystem (118) kommunikativ verbunden ist.

5. Cyber-physisches System nach einem der Ansprüche 1 oder 2, wobei ein Modul zweiter Art einen Prozessor in einem Managementsystem (M2) umfasst, der geeignet und konfiguriert ist, um eine Plausibilitätsprüfung der Daten, die von einem Modul erster Art (103, 110) bereitgestellt sind, durchzuführen.

6. Cyber-physisches System nach einem der vorhergehenden Ansprüche, wobei das Modul erster Art (103, 122, 123) eine 360° Kamera (104, 129, 125) umfasst.

7. Cyber-physisches System nach einem der vorhergehenden Ansprüche, bei dem ein Modul erster Art (103, 122, 123, 110) eine Drohne (122) ist.

8. Cyber-physisches System nach einem der vorhergehenden Ansprüche, bei dem in einer einzigen Drohne (122) die Module erster Art, Module zweiter Art und Module dritter Art realisiert sind.

9. Cyber-physisches System nach einem der vorhergehenden Ansprüche, wobei ein Modul zweiter Art ein Managementsystem (M2) umfasst.

10. Cyber-physisches System nach einem der vorhergehenden Ansprüche, wobei ein Modul zweiter Art ein Datenarchiv (115) umfasst.

11. Cyber-physisches System nach einem der vorhergehenden Ansprüche, wobei ein Modul zweiter Art (M2) ein Geoinformationssystem (120) umfasst.

12. Cyber-physisches System nach einem der vorhergehenden Ansprüche, wobei ein Modul zweiter Art ein Lernsystem und/oder Modelarchiv (135) umfasst.

13. Verfahren zur automatisierten Säuberung von Grünanlagen, mittels eines Cyber-physischen Systems, nach einem der Ansprüche 1 bis 12, bei dem
- ein Ist-Zustand einer Stelle der Grünanlage mit einem störenden Objekt (100) erfasst wird,
- eine Meldung darüber mittels Übertragung und Bereitstellung entsprechender Daten an ein Managementsystem (M2) in einem Modul zweiter Art (M2, 115, 118, 135) erfolgt,
- durch das Managementsystem (M2) direkt oder mittels zumindest eines dafür konfigurierten und eingerichteten Prozessors ein Modul dritter Art (122, 123) mit einem Manipulator (126, 130) aktiviert wird und
- zumindest ein Modul dritter Art(122, 123) das störende Objekt anfährt, anschwimmt und/oder anfliegt, aufnimmt und/oder entfernt.

14. Verfahren nach Anspruch 13, bei dem ein Modul zweiter Art (M2, 115, 118) ein Regel- und Steuersystem (M2) umfasst.

15. Verfahren nach einem der Ansprüche 13 oder 14, bei dem eine Plausibilitätsprüfung (121) der bereitgestellten Daten von den ersten Modulen (103, 110, 122, 123) im Managementsystem (M2) vor der Aktivierung eines Moduls der dritten Art (122, 123) durchgeführt wird.

16. Verfahren nach einem der Ansprüche 13 bis 15, wobei die Module dritter Art (103, 122, 123) Daten zur Charakterisierung des störenden Objekts (100) bereitstellen, die sie dem Datenarchiv (115, 116) und/oder dem Lernsystem (119) eines Moduls zweiter Art zum Training bereitstellen.

17. Verfahren nach Anspruch 16, bei dem das Lernsystem (119) und/oder Modelarchiv (135) eines zweiten Moduls (M2, 115, 118,135) mittels Over-the-Air-"OTA"-Update durch Training aktualisierte ML-Modelle (119, 105, 131, 127) den Modulen erster und dritter Art (103, 110, 122, 123) übermittelt.
